# EUROPEAN PATENT SPECIFICATION

(11) **EP 3 875 860 B1**
(45) Date of publication and mention of the grant of the patent: **20.12.2023**
(21) Application number: 20161255.3
(22) Date of filing: 05.03.2020
(51) Int. Cl.: F24D 3/10, F24D 3/18, F24D 10/00, F24D 11/00, F24D 11/02

(54) **A SYSTEM AND A METHOD FOR REDUCING TEMPERATURE OF A HEAT TRANSFER FLUID IN A HEATING SYSTEM**
SYSTEM UND VERFAHREN ZUR REDUZIERUNG DER TEMPERATUR EINES WÄRMEÜBERTRAGUNGSFLUIDS IN EINEM HEIZSYSTEM
SYSTÈME ET PROCÉDÉ PERMETTANT DE RÉDUIRE LA TEMPÉRATURE D'UN FLUIDE DE TRANSFERT DE CHALEUR DANS UN SYSTÈME DE CHAUFFAGE

(43) Date of publication of application: 08.09.2021
(73) Proprietor: E.ON Sverige AB, 205 09 Malmö (SE)
(72) Inventor: Rosenqvist, Fredrik, 254 51 Helsingborg (SE); Rosén, Per, 227 33 Lund (SE); Skogström, Jacob, 234 42 Lomma (SE); Carlström, Helen, 237 36 Bjärred (SE); Lindoff, Bengt, 237 35 Bjärred (SE); Ekestubbe, Jonas, 226 57 Lund (SE)
(74) Representative: AWA Sweden AB

(56) References cited:
- EP-A1- 3 273 169
- EP-A1- 3 553 396
- WO-A1-2010/145040
- WO-A2-2010/102626

## Description

### Field of invention

The invention relates to a system and a method for reducing a temperature of a heat transfer fluid flowing in a return conduit of a district heating grid.

### Technical Background

A district heating grid is used for distributing heat generated in a centralized location. Heat is distributed by conducting heated heat transfer fluid via a feed conduit to a heat consumer. The heat consumer is typically extracting heat from the heat transfer fluid of the feed conduit using a heat exchanger. After being conducted through the heat exchanger the heat transfer fluid is returned to the centralized location via a return conduit.

However, the heat transfer fluid in the return conduit often has a too high temperature, e.g. a temperature of 50°C or higher. Upon the temperature of heat transfer fluid, entering the centralized location via the return conduit, being too high, efficiency of the heating service plant heating the heat transfer fluid at the centralized location may be low.

Therefore, there is a need for improvements in increasing the efficiency of the heating service plant providing a district heating grid with heat.

In order to use residual heat in the return of a district heating network, EP 3 553 396 proposes a district heating receiving station with a heat accumulator and a heat pump, which removes heat from the district heating network at a lower temperature than a used or desired temperature enables. The district heating receiving station lowers a return temperature and thereby a heat loss in the return of the district heating network.

WO 2010/145040 discloses a district energy sharing system (DESS) comprising a thermal energy circuit which circulates and stores thermal energy in water, at least one client building thermally coupled to the circuit and which removes some thermal energy from the circuit ("thermal sink") and/or deposits some thermal energy into the circuit ("thermal source"), and at least one thermal server plant that can be thermally coupled to external thermal sources and/or sinks (e.g. a geothermal ground source) and whose function is to maintain thermal balance within the DESS.

WO 2010/102626 discloses a closed loop heating system comprising at least one closed fluid circuit, at least one thermal energy receiving unit and at least one thermal energy releasing unit. The closed loop heating system also comprises a heat pump, transferring thermal energy from at least one first part of said fluid circuit to at least one second part of said fluid circuit.

EP 3 273 169 relates to a heat transfer system.

### Summary of invention

In view of that stated above, the object of the present invention is to provide a system that adequately addresses to the criteria of increasing efficiency at a heating service plant providing a district heating grid with heat.

To achieve the object and also other objects that will be evident from the following description, a system and a method for reducing a temperature of district heating heat transfer fluid flowing in a return conduit of a district heating grid are provided.

According to a fist aspect, there is provided a system for reducing a temperature of district heating heat transfer fluid flowing in a return conduit of a district heating grid. The system comprising:
a heat exchanger having:
   a primary side inlet connected to the return conduit of the district heating grid via a primary side feed conduit,
   a primary side outlet connected to the return conduit of the district heating grid via a primary side return conduit,
   a secondary side inlet connected to an intermediate circuit, and
   a secondary side outlet connected to the intermediate circuit.
   wherein the heat exchanger is configured to exchange heat from district heating heat transfer fluid entering the primary side inlet of the heat exchanger to intermediate circuit heat transfer fluid entering the secondary side inlet of the heat exchanger, and
wherein the intermediate circuit comprises a heat pump configured to pump heat from intermediate circuit heat transfer fluid of the intermediate circuit to heating circuit heat transfer fluid of a heating circuit.

Upon the district heating heat transfer fluid has passed through the primary side of the heat exchanger the temperature of the district heating heat transfer fluid may have dropped. Hence, district heating heat transfer fluid routed back to the return conduit may have a reduced temperature.

By exchanging heat from the district heating heat transfer fluid to the intermediate circuit heat transfer fluid, the temperature of district heating heat transfer fluid being routed back to the return conduit of the district heating grid may be reduced. With a reduced temperature of district heating heat transfer fluid flowing in the return conduit, the efficiency at a heat service plant, configured to heat district heating heat transfer fluid of the district heating grid, may improve. This since the efficiency of the heat service plant is dependent on a temperature difference between a temperature of district heat transfer fluid at a district heat transfer fluid infeed of the heat service plant and a temperature of district heat transfer fluid at a district heat transfer fluid outfeed of the heat service plant. Accordingly, with a lower temperature of district heat transfer fluid in the return conduit, the return conduit is ending at the district heat transfer fluid infeed of the heat service plant, the efficiency of the heat service plant may be improved.

The present system is based on using a combination of passive and active parts. With passive is meant heat exchange between different hydraulic circuits. With active is meant an added ability to alter fluid temperatures beyond what just a heat exchanger can achieve. Typically, the fluid temperature is altered by pumping heat between different hydraulic circuits.

In case of using passive elements there is always a "temperature depletion" over the heat exchanger. When distributing heat, the temperature after the heat exchanger will always be lower than before. That is, the maximum temperature requirements at the point of taking out heat must always be lower than the temperature of the heat transfer fluid in the distribution grid. The passive solution requires that the cooling of heat transfer fluid of the distribution grid, in case of heat outtake can be done to a reasonable extent. Otherwise the possibility of hydraulically distributing the heat will not be present.

When using a combination of passive and active elements as in the present invention heat pumping is decentralized to the different point of heat outtake. Doing so, it is possible to satisfy local thermal needs without having to distribute sufficiently warm heat transfer fluid for the need, in case of a heating need, which is the case if only passive elements are to be used. This creates totally different degrees of freedom than the rather strict thermal frames that apply on today's district heating grids where only passive elements are used.

Further, by, as in the present system, using a passive component for primarily take out heat from the distribution grid and using an active component on a secondary side of the passive component, less constraints on the active component of the assembly may be set. For example, a passive component (e.g. the heat exchanger) may be designed to withstand higher fluid pressures than an active component (the heat pump). Further, an active component is typically designed to be feed with heat transfer fluid in a fixed temperature range, such a fixed temperature range is typically rather narrow. Passive components are typically not depending on the temperature of heat transfer fluid feed thereto. This is especially useful since the temperature range in the return conduit of the district heating grid may vary greatly.

The intermediate circuit comprise an energy storage configured to store thermal energy. As such, thermal energy from the return conduit of the district heating grid may be stored and used upon request. Such a configuration may preserve energy if the heat of the intermediate circuit heat transfer fluid comprises more energy at a point in time than required by the heating circuit at that point in time. The energy storage may provide additional energy to the heating circuit if the heat from the intermediate circuit transfer fluid at a point in time comprises less energy than required by the heating circuit at that point in time.

The intermediate circuit may comprise a first valve configured to provide regulation of the intermediate circuit heat transfer fluid. As such, the intermediate circuit may be regulated with regards to the amount of intermediate circuit heat transfer fluid being routed to the heat exchanger. The first valve may regulate if the intermediate circuit heat transfer fluid is to be routed through the heat exchanger or to not.

The intermediate circuit further comprise a second valve configured to control the flow of intermediate circuit heat transfer fluid routed to the energy storage or to the heat pump. As such, efficient control of the energy storage may be achieved. For example, if the heating circuit requires less thermal energy than is present in the intermediate circuit heat transfer fluid, the second vale can route the intermediate circuit heat transfer fluid towards the energy storage. If the heating circuit requires the full amount of thermal energy present in the intermediate circuit heat transfer fluid, the second vale can route the intermediate circuit heat transfer fluid towards the heating circuit.

The system may further comprise a pump configured to route district heating heat transfer fluid of the return conduit of the district heating grid to the heat exchanger. The pump may be configured to pump all of the district heating heat transfer fluid in the return conduit through the heat exchanger. The pump may be configured to pump a portion of the district heating heat transfer fluid in the return conduit through the heat exchanger.

According to a second aspect there is provided a method of reducing a temperature of district heating heat transfer fluid flowing in a return conduit of a district heating grid, the method comprising:
routing district heating heat transfer fluid flowing in the return conduit of the district heating grid from the return conduit to a heat exchanger;
extracting, at the heat exchanger, heat from the district heating heat transfer fluid routed thereto;
depositing, at the heat exchanger, the extracted heat to intermediate circuit heat transfer fluid of an intermediate circuit comprising a heat pump and an energy storage,
routing the intermediate circuit heat transfer fluid to the heat pump or the energy storage,
pumping, at the heat pump, heat from intermediate circuit heat transfer fluid of the intermediate circuit to heating circuit heat transfer fluid of a heating circuit,
storing, at the energy storage, surplus heat from the intermediate circuit heat transfer fluid,
routing, after extracting heat from the district heating heat transfer fluid routed thereto, the district heating heat transfer fluid routed to the heat exchanger back to the return conduit of the district heating circuit.

Advantages associated with the different features and preferred embodiments have been discussed in detail in the above in relation to the system. The discussion is equally valid in relation to the method. It may be noted that the various preferred embodiments or optional features are equally applicable to the disclosed method.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The invention will by way of example be described in more detail with reference to the appended schematic drawings, which shows a presently preferred embodiment of the invention.
Fig. 1 illustrates a system for reducing a temperature of district heating heat transfer fluid flowing in a return conduit of a district heating grid connected to the return conduit of the district heating grid.
Fig. 2 illustrates a system for reducing a temperature of district heating heat transfer fluid flowing in a return conduit of a district heating grid connected to the return conduit of the district heating grid accoridng to the invention.
Fig. 3 illustrates a flowchart of a method for reducing a temperature of district heating heat transfer fluid flowing in a return conduit of a district heating grid.

### Detailed description of preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

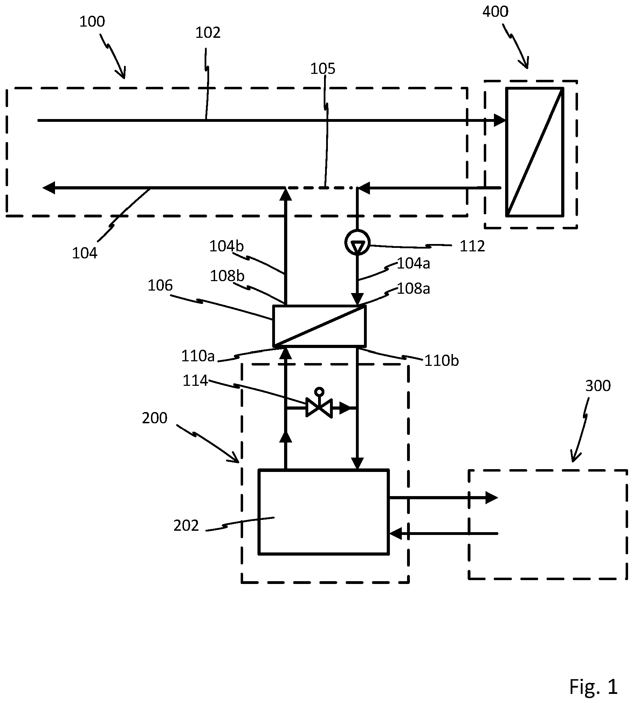

Fig. 1 shows a system for reducing a temperature of district heating heat transfer fluid flowing in a return conduit 104 of a district heating grid 100. With a reduced temperature of district heating heat transfer fluid flowing in the return conduit 104, the efficiency at a heat service plant, configured to heat district heating heat transfer fluid of the district heating grid 100, may improve. This is because the efficiency of the heat service plant is dependent on a temperature difference between a temperature of district heat transfer fluid at a district heat transfer fluid infeed of the heat service plant and a temperature of district heat transfer fluid at a district heat transfer fluid outfeed of the heat service plant. With a lower temperature of district heat transfer fluid in the return conduit 104, the return conduit 104 is ending at the district heat transfer fluid infeed of the heat service plant, the efficiency of the heat service plant may be improved.

The district heating grid 100 is arranged to circulate district heating heat transfer fluid. The district heating grid 100 comprises a feed conduit 102 and the return conduit 104. The district heating grid 100 has one or more heat transfer connection to heat consumer(s) 400.

When the district heating grid 100 is in operation, district heating heat transfer fluid is feed from the heat service plant via the feed conduit 102 to the one or more heat consumer(s) 400. At the heat consumer 400 heat may be extracted, by means of a consumer heat exchanger, from district heating heat transfer fluid feed to the heat consumer 400 via the feed conduit 102. District heating heat transfer fluid feed to the consumer heat exchanger is thereafter returned to the return conduit 104 for return to the heat service plant through the return conduit 104.

The system for reducing a temperature of district heating heat transfer fluid flowing in the return conduit 104 of the district heating grid 100 comprises a heat exchanger 106 connectable to the return conduit 104 of the district heating grid 100. The heat exchanger 106 is connectable to the return conduit 104 at a primary side thereof via a primary side feed conduit 104a connected to a primary side inlet 108a of the heat exchanger 106. The heat exchanger 106 is further connectable to the return conduit 104 at the primary side thereof via a primary side return conduit 104b connected to a primary side outlet 108b of the heat exchanger 106.

In operation of the system, district heating heat transfer fluid of the return conduit 104 is routed via the heat exchanger 106. Especially, an infeed of district heating heat transfer fluid of the return conduit 104 is feed to the heat exchanger 106 via the primary side feed conduit 104a connected to the primary side inlet 108a of the heat exchanger 106. District heating heat transfer fluid of the return conduit 104 feed to the heat exchanger 106 is routed back to the return conduit 104 via primary side return conduit 104b connected to the primary side outlet 108b of the heat exchanger 106. A portion of the district heating heat transfer fluid in the return conduit 104 may be routed via the heat exchanger 106. Hence, there may be a by-pass connection 105 from a connection point between the primary side feed conduit 104a and the return conduit 104 and a connection point between the primary side return conduit 104b and the return conduit 104. Alternatively, all the district heating heat transfer fluid in the return conduit 104 may be routed via the heat exchanger 106.

The system may further comprise a pump 112 configured to route heating district heating heat transfer fluid from the return conduit 104 to the heat exchanger 106. The pump 112 may be arranged in the primary side feed conduit 104a. Alternatively, or in combination, the pump 112 may be arranged in the primary side return conduit 104b. The pump 112 may be controlled so that all or a portion of heating district heating heat transfer fluid is routed from the return conduit 104 to the heat exchanger 106.

At the heat exchanger 106, heat may be extracted from district heating heat transfer fluid passing the primary side of the heat exchanger 106. Hence, district heating heat transfer fluid returned back to the return conduit 104 will have a lower temperature when being returned to the return conduit 104 than district heating heat transfer fluid routed to the heat exchanger 106.

The heat exchanger 106 is further, at a secondary side thereof, connected to an intermediate circuit 200. For this, the heat exchanger 106 comprises a secondary side inlet 110a and a secondary side outlet 110b. The secondary side inlet 110a is connected to the intermediate circuit 200 The secondary side outlet 110b is connected to the intermediate circuit 200. Intermediate circuit heat transfer fluid circulated in the intermediate circuit 200 enters the heat exchanger 106 at the secondary side inlet 110a and exits the heat exchanger 106 at the secondary side outlet 11 0b. Hence, heat extracted from the district heating transfer fluid at the primary side of the heat exchanger 106 is deposited to the intermediate circuit heat transfer fluid at the secondary side of the heat exchanger 106. Thereby, the intermediate circuit heat transfer fluid has a higher temperature when exiting the heat exchanger 106 than when entering the heat exchanger 106. Hence, the heat exchanger 106 provides a passive heat transfer connection between the district heating grid 100, especially the return conduit 104 of the district heating grid 100, and the intermediate circuit 200.

The intermediate circuit 200 is arranged to circulate intermediate circuit heat transfer fluid. The intermediate circuit 200 is fluidly separated from the district heating grid 100. The intermediate circuit 200 has a heat transfer connection to a heating circuit 300, via a heat pump 202. The heat pump 202 is configured to pump heat from intermediate circuit heat transfer fluid of the intermediate circuit 200 to heating circuit heat transfer fluid of a heating circuit 300. The heat pump 202 is an active component. It is to be noted that the intermediate circuit 200 may comprise one or more active components. Hence, the heat pump 202 provides an active heat transfer connection between the intermediate circuit 200 and the heating circuit 300.

The heating circuit 300 is arranged to circulate heating circuit heat transfer fluid. The heating circuit 300 is fluidly separated from the intermediate circuit 200. The heating circuit 300 is fluidly separated from the district heating grid 100.

As is evident form Fig. 1, the intermediate circuit may comprise a first valve 114. The first valve 114 is configured to provide regulation of the intermediate circuit heat transfer fluid. Thereby allowing for regulating or controlling the flow of intermediate circuit heat transfer fluid through the heat exchanger 106 and/or the heat pump 202.

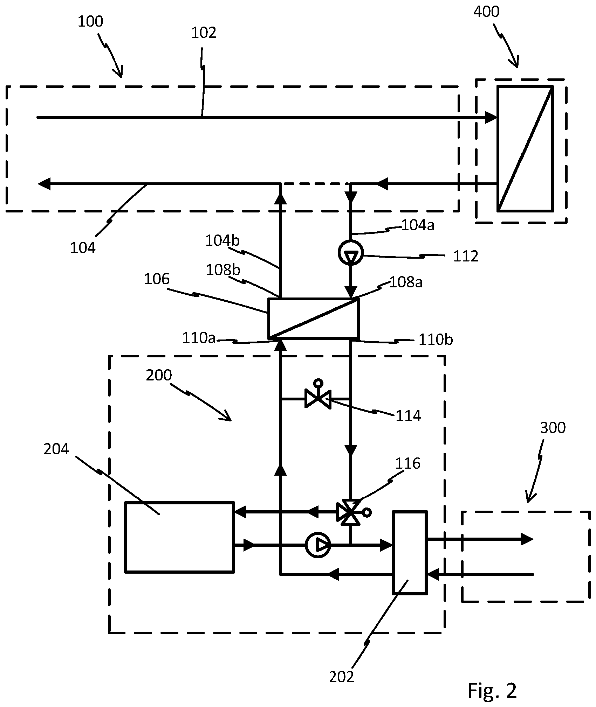

With reference to Fig. 2, the system for reducing a temperature of district heating heat transfer fluid flowing in a return conduit 104 of a district heating grid 100 may comprise an energy storage 204. The energy storage 204 is configured to store thermal energy. The energy storage 204 is forming part of the intermediate circuit 200. By the energy storage 204, any surplus of heat not being pumped to the heating circuit 300 may be stored. Further, upon the intermediate circuit 200 is not provided with enough heat from the heat exchanger 106 to sufficiently provide the heating circuit with heat, the energy storage may complement with heat to be pumped to the heating circuit 300.

The intermediate circuit 200 may comprise a second valve 116 configured to control the flow of intermediate circuit heat transfer fluid routed to the energy storage 300. The second valve is configured to be able to alternate the routing of the heated intermediate circuit heat transfer fluid to either the energy storage 204 or directly to the heating circuit 300. As such, the amount of heat being transferred to the energy storage 204 may be controlled in an efficient manner.

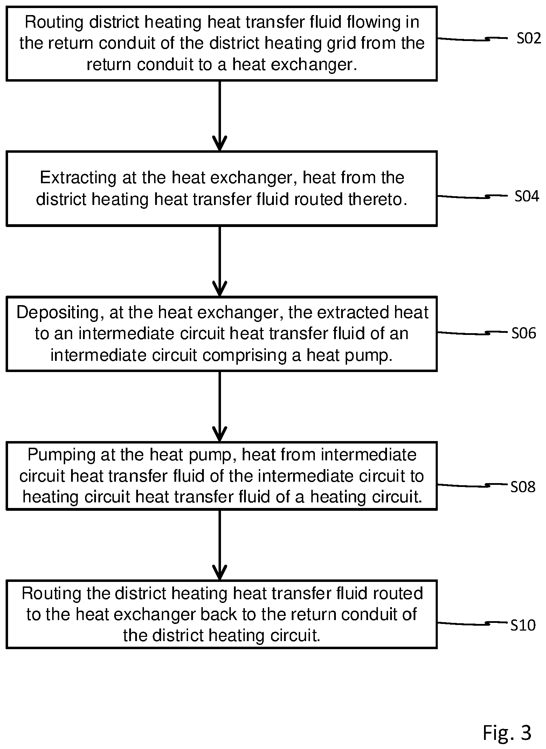

A method of reducing a temperature of district heating heat transfer fluid flowing in a return conduit of a district heating grid will now be discussed in connection with Fig. 3. The method comprises the following steps/acts. The steps/acts may be performed in any suitable order. Routing S02 district heating heat transfer fluid flowing in the return conduit of the district heating grid from the return conduit to a heat exchanger. At the heat exchanger, heat from the district heating heat transfer fluid routed thereto is extracted S04. The extracted heat from the district heating heat transfer fluid is deposited S06 to an intermediate circuit heat transfer fluid of an intermediate circuit, wherein the intermediate circuit comprises a heat pump, at the heat pump, heat from intermediate circuit heat transfer fluid of the intermediate circuit is pumped S08 to heating circuit heat transfer fluid of a heating circuit. After extracting S02 heat from the district heating heat transfer fluid routed to the heat exchanger, routing S10 the district heating heat transfer fluid back to the return conduit of the district heating circuit.

The person skilled in the art realizes that the present invention by no means is limited to the preferred embodiments described above. On the contrary, many modifications and variations are possible within the scope of the appended claims.

For example, the method may further comprise routing intermediate circuit heat transfer fluid of the intermediate circuit to an energy storage configured to store thermal energy.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A system for reducing a temperature of district heating heat transfer fluid flowing in a return conduit (104) of a district heating grid (100), the system configured to be connected to the return conduit of the district heating grid and comprising:
an intermediate circuit; a heat exchanger having (106):
a primary side inlet (108a) configured to be connected to the return conduit (104) of the district heating grid (100) via a primary side feed conduit (104a),
a primary side outlet (108b) configured to be connected to the return conduit (104) of the district heating grid (100) via a primary side return conduit (104b),
a secondary side inlet (110a) connected to an intermediate circuit (200),
a secondary side outlet (110b) connected to the intermediate circuit (200),
wherein the heat exchanger (106) is configured to exchange heat from district heating heat transfer fluid entering the primary side inlet (108a) of the heat exchanger (106) to intermediate circuit heat transfer fluid entering the secondary side inlet (110a) of the heat exchanger (106), and
wherein the intermediate circuit (200) comprises a heat pump (202) configured to pump heat from intermediate circuit heat transfer fluid of the intermediate circuit (200) to heating circuit heat transfer fluid of a heating circuit (300),
wherein the intermediate circuit (200) further comprises an energy storage (204) configured to store thermal energy,
**characterized in that** the intermediate circuit (200) further comprises a second valve (116) configured to control the flow of intermediate circuit heat transfer fluid routed to the energy storage (204) or to the heat pump (202).

2. The system according to claim 1, wherein the intermediate circuit (200) comprises a first valve (114) configured to provide regulation of the intermediate circuit heat transfer fluid.

3. The system according to claim 1 or 2, further comprising a pump (112) configured to route district heating heat transfer fluid of the return conduit (104) of the district heating grid (100) to the heat exchanger (106).

4. A method of reducing a temperature of district heating heat transfer fluid flowing in a return conduit of a district heating grid, the method comprising:
routing (S02) district heating heat transfer fluid flowing in the return conduit of the district heating grid from the return conduit to a heat exchanger;
extracting (S04), at the heat exchanger, heat from the district heating heat transfer fluid routed thereto;
depositing (S06), at the heat exchanger, the extracted heat to an intermediate circuit heat transfer fluid of an intermediate circuit comprising a heat pump and an energy storage,
routing the intermediate circuit heat transfer fluid to the heat pump or the energy storage,
pumping (S08), at the heat pump, heat from intermediate circuit heat transfer fluid of the intermediate circuit to heating circuit heat transfer fluid of a heating circuit,
storing, at the energy storage, surplus of heat from the intermediate circuit heat transfer fluid,
routing (S10), after extracting heat from the district heating heat transfer fluid routed thereto, the district heating heat transfer fluid routed to the heat exchanger back to the return conduit of the district heating circuit.

## Patentansprüche

1. System zur Reduzierung einer Temperatur von Fernheizungs-Wärmeübertragungsfluid, das in einer Rücklaufleitung (104) eines Fernwärmenetzes (100) strömt, wobei das System dafür ausgelegt ist, mit der Rücklaufleitung des Fernwärmenetzes verbunden zu werden, und umfasst:
einen Zwischenkreis;
einen Wärmetauscher (106), welcher aufweist:
einen primärseitigen Einlass (108a), der dafür ausgelegt ist, über eine primärseitige Vorlaufleitung (104a) mit der Rücklaufleitung (104) des Fernwärmenetzes (100) verbunden zu werden,
einen primärseitigen Auslass (108b), der dafür ausgelegt ist, über eine primärseitige Rücklaufleitung (104b) mit der Rücklaufleitung (104) des Fernwärmenetzes (100) verbunden zu werden,
einen sekundärseitigen Einlass (110a), der mit einem Zwischenkreis (200) verbunden ist,
einen sekundärseitigen Auslass (110b), der mit dem Zwischenkreis (200) verbunden ist,
wobei der Wärmetauscher (106) dafür ausgelegt ist, Wärme von Fernheizungs-Wärmeübertragungsfluid, das in den primärseitigen Einlass (108a) des Wärmetauschers (106) einströmt, zu Zwischenkreis-Wärmeübertragungsfluid, das in den sekundärseitigen Einlass (110a) des Wärmetauschers (106) einströmt, auszutauschen, und
wobei der Zwischenkreis (200) eine Wärmepumpe (202) umfasst, die dafür ausgelegt ist, Wärme von Zwischenkreis-Wärmeübertragungsfluid des Zwischenkreises (200) zu Heizkreis-Wärmeübertragungsfluid eines Heizkreises (300) zu pumpen,
wobei der Zwischenkreis (200) ferner einen Energiespeicher (204) umfasst, der dafür ausgelegt ist, Wärmeenergie zu speichern,
**dadurch gekennzeichnet, dass** der Zwischenkreis (200) ferner ein zweites Ventil (116) umfasst, das dafür ausgelegt ist, den Durchfluss von Zwischenkreis-Wärmeübertragungsfluid zu steuern, das zu dem Energiespeicher (204) oder zu der Wärmepumpe (202) geleitet wird.

2. System nach Anspruch 1, wobei der Zwischenkreis (200) ein erstes Ventil (114) umfasst, das dafür ausgelegt ist, für eine Regulierung des Zwischenkreis-Wärmeübertragungsfluids zu sorgen.

3. System nach Anspruch 1 oder 2, welches ferner eine Pumpe (112) umfasst, die dafür ausgelegt ist, Fernheizungs-Wärmeübertragungsfluid der Rücklaufleitung (104) des Fernwärmenetzes (100) zu dem Wärmetauscher (106) zu leiten.

4. Verfahren zur Reduzierung einer Temperatur von Fernheizungs-Wärmeübertragungsfluid, das in einer Rücklaufleitung eines Fernwärmenetzes strömt, wobei das Verfahren umfasst:
Leiten (S02) von Fernheizungs-Wärmeübertragungsfluid, das in der Rücklaufleitung des Fernwärmenetzes strömt, von der Rücklaufleitung zu einem Wärmetauscher;
Entziehen (S04), am Wärmetauscher, von Wärme von dem zu ihm geleiteten Fernheizungs-Wärmeübertragungsfluid;
Übertragen (S06), am Wärmetauscher, der entzogenen Wärme auf ein Zwischenkreis-Wärmeübertragungsfluid eines Zwischenkreises, der eine Wärmepumpe und einen Energiespeicher umfasst;
Leiten des Zwischenkreis-Wärmeübertragungsfluids zu der Wärmepumpe oder dem Energiespeicher;
Pumpen (S08), an der Wärmepumpe, von Wärme von dem Zwischenkreis-Wärmeübertragungsfluid des Zwischenkreises zu Heizkreis-Wärmeübertragungsfluid eines Heizkreises;
Speichern, an dem Energiespeicher, eines Überschusses von Wärme von dem Zwischenkreis-Wärmeübertragungsfluid;
Leiten (S10), nach dem Entziehen von Wärme von dem zu ihm geleiteten Fernheizungs-Wärmeübertragungsfluid, des zu dem Wärmetauscher geleiteten Fernheizungs-Wärmeübertragungsfluids zurück zu der Rücklaufleitung des Fernwärmekreises.

## Revendications

1. Système destiné à réduire une température d'un fluide de transfert de chaleur de chauffage urbain s'écoulant dans un conduit de retour (104) d'un réseau de chauffage urbain (100), le système étant configuré pour être raccordé au conduit de retour du réseau de chauffage urbain et comprenant :
un circuit intermédiaire ;
un échangeur de chaleur (106) comportant :
une entrée côté primaire (108a) configurée pour être raccordée au conduit de retour (104) du réseau de chauffage urbain (100) par le biais d'un conduit d'alimentation côté primaire (104a),
une sortie côté primaire (108b) configurée pour être raccordée au conduit de retour (104) du réseau de chauffage urbain (100) par le biais d'un conduit de retour côté primaire (104b),
une entrée côté secondaire (110a) raccordée à un circuit intermédiaire (200),
une sortie côté secondaire (110b) raccordée au circuit intermédiaire (200),
dans lequel l'échangeur de chaleur (106) est configuré pour échanger de la chaleur à partir d'un fluide de transfert de chaleur de chauffage urbain entrant par l'entrée côté primaire (108a) de l'échangeur de chaleur (106) vers un fluide de transfert de chaleur de circuit intermédiaire entrant par l'entrée côté secondaire (110a) de l'échangeur de chaleur (106), et
dans lequel le circuit intermédiaire (200) comprend une pompe à chaleur (202) configurée pour pomper de la chaleur à partir du fluide de transfert de chaleur de circuit intermédiaire du circuit intermédiaire (200) vers le fluide de transfert de chaleur de circuit de chauffage d'un circuit de chauffage (300),
dans lequel le circuit intermédiaire (200) comprend en outre un accumulateur d'énergie (204) configuré pour stocker de l'énergie thermique,
**caractérisé en ce que** le circuit intermédiaire (200) comprend en outre une deuxième soupape (116) configurée pour commander l'écoulement du fluide de transfert de chaleur de circuit intermédiaire acheminé vers l'accumulateur d'énergie (204) ou vers la pompe à chaleur (202).

2. Système selon la revendication 1, dans lequel le circuit intermédiaire (200) comprend une première soupape (114) configurée pour assurer une régulation du fluide de transfert de chaleur de circuit intermédiaire.

3. Système selon la revendication 1 ou 2, comprenant en outre une pompe (112) configurée pour acheminer du fluide de transfert de chaleur de chauffage urbain du conduit de retour (104) du réseau de chauffage urbain (100) vers l'échangeur de chaleur (106).

4. Procédé de diminution d'une température d'un fluide de transfert de chaleur de chauffage urbain dans un conduit de retour d'un réseau de chauffage urbain, le procédé comprenant :
l'acheminement (S02) de fluide de transfert de chaleur de chauffage urbain s'écoulant dans le conduit de retour du réseau de chauffage urbain, à partir du conduit de retour vers un échangeur de chaleur ;
l'extraction (S04), au niveau de l'échangeur de chaleur, de chaleur à partir du fluide de transfert de chaleur de chauffage urbain acheminé vers celui-ci ;
la distribution (S06), au niveau de l'échangeur de chaleur, de la chaleur extraite à un fluide de transfert de chaleur de circuit intermédiaire d'un circuit intermédiaire comprenant une pompe à chaleur et un accumulateur d'énergie,
l'acheminement du fluide de transfert de chaleur de circuit intermédiaire vers la pompe à chaleur ou l'accumulateur d'énergie,
le pompage (S08), au niveau de la pompe à chaleur, de chaleur à partir du fluide de transfert de chaleur de circuit intermédiaire du circuit intermédiaire vers le fluide de transfert de chaleur de circuit de chauffage d'un circuit de chauffage,
le stockage, au niveau de l'accumulateur d'énergie, d'un excédent de chaleur à partir du fluide de transfert de chaleur de circuit intermédiaire,
le renvoi (S10), après l'extraction de chaleur à partir du fluide de transfert de chaleur de chauffage urbain acheminé vers celui-ci, du fluide de transfert de chaleur de chauffage urbain acheminé vers l'échangeur de chaleur vers le conduit de retour du circuit de chauffage urbain.
